# EUROPEAN PATENT APPLICATION

(11) **EP 4 385 707 A1**
(43) Date of publication of application: **19.06.2024**
(21) Application number: 23780510.6
(22) Date of filing: 28.03.2023
(51) Int. Cl.: B29C 63/22, B29C 33/14, B29C 33/42, B29C 45/14, B29C 65/48, B62D 1/04, B29K 21/00, B29K 105/04

(54) **SURFACE MATERIAL, SHAFT MEMBER UNIT, AND METHOD FOR WRAPPING SURFACE MATERIAL**

(30) Priority: 30.03.2022 JP 2022056308
(71) Applicant: Sumitomo Riko Company Limited, Komaki-shi, Aichi 485-8550 (JP)
(72) Inventor: OKUMURA, Takemasa, Komaki-shi, Aichi 485-8550 (JP); NASU, Masaki, Komaki-shi, Aichi 485-8550 (JP)
(74) Representative: Becker, Eberhard
(86) International application number: PCT/JP2023/012485
(87) International publication number: WO 2023/190501

(57) **Abstract**

Provided is a surface material (30) that is wrapped around the region of at least a part of a ring portion (12) in the circumferential direction of the ring portion (12), the surface material (30) having a foam resin or elastomer mold-formed into a C- or U-shaped cross-section on a plane orthogonal to the axial direction of the ring portion (12) and having a parting line (36) formed on the outer surface thereof, and the parting line (36) being disposed on the surface opposite the ring portion (12) when wrapped around the ring portion (12).

## Description

### BACKGROUND

### Technical Field

The disclosure relates to a surface material, a shaft member unit, and a method for wrapping a surface material.

### Description of Related Art

Patent Document 1 discloses a technique of forming a surface part of a steering wheel by using a resin foamed in a mold. A technique in which a core metal is disposed in the mold, and a raw material is injected into the mold to foam, thereby forming the surface part where the core metal is embedded is disclosed.

### [Prior Art Document(s)]

### [Patent Document(s)]

[Patent Document 1] Japanese Laid-open No. H11-268652

### SUMMARY

### Means for solving the issue

However, according to the above technique, on the outer surface of the surface part, a parting line is formed in a portion facing the inner side of a mating surface of the mold. Therefore, there is an issue that the appearance of the surface part deteriorates.

The disclosure is made in view of such background, and provides a surface material that improves the appearance, a shaft member unit that includes the surface material, and a method for wrapping the surface material.

### Means for solving the issue

An aspect of the disclosure provides a surface material wrapped along a circumferential direction of a shaft member in a region of at least a portion of the shaft member. In the surface material, in a state in which a foamed resin or an elastomer is die-molded, a cross-sectional shape of a planar surface orthogonal to an axial direction of the shaft member is formed to be a C shape or a U shape, and a parting line is formed on an outer surface. In a state of being wrapped around the shaft member, the parting line is disposed on a surface facing the shaft member.

Another aspect of the disclosure provides a surface material wrapped along a circumferential direction of a shaft member in a region of at least a portion of the shaft member. A cross-sectional shape of a planar surface orthogonal to an axial direction of the shaft member is formed in a C shape or a U shape. A parting line is formed on an inner surface.

Another aspect of the disclosure provides a shaft member unit. The shaft member unit includes: the surface material; the shaft member, in which the surface material is wrapped around an outer surface.

In addition, another aspect of the disclosure provides a method for wrapping a surface material. The method includes: a molding process of forming a surface material in which a cross-sectional shape is formed in a C shape or a U shape through die-molding of a foamed resin or an elastomer and which has a parting line on an outer surface; and
a wrapping process of turning over an inner surface and an outer surface of the surface material to be wrapped around an outer surface of a shaft member.

### Inventive effects

According to the configuration, in the state in which the surface material is wrapped around a ring part, the parting line is not exposed on the outer surface. Therefore, the appearance of the surface material is favorable.

According to the above, it is possible to provide the surface material with favorable appearance, the shaft member unit using the surface material, and the method for wrapping the surface material.

It is noted that the reference numerals in parentheses in the claims indicate correspondence with specific means described in the embodiments to be described afterwards, and shall not be construed as limiting the technical scope of the disclosure.

### BRIEF DESCRIPTION OF THE DRAWINGS

[FIG. 1] FIG. 1 is a front view illustrating a steering wheel according to Embodiment 1.
[FIG. 2] FIG. 2 is a cross-sectional view taken along line II-II of FIG. 1
[FIG. 3] FIG. 3 is plan view illustrating a conductive member of Embodiment 1.
[FIG. 4] FIG. 4 is a cross-sectional view taken along line IV-IV of FIG. 3
[FIG. 5] FIG. 5 is cross-sectional view illustrating a mold for forming a surface material of Embodiment 1.
[FIG. 6] FIG. 6 is plan view illustrating the surface material of Embodiment 1.
[FIG. 7] FIG. 7 is a side view when the surface material of Embodiment 1 is viewed from an arrow sign A of FIG. 6.
[FIG. 8] FIG. 8 is a cross-sectional view taken along line VIII-VIII of FIG. 6
[FIG. 9] FIG. 9 is a cross-sectional view illustrating a state in which the conductive member is installed to the surface material of Embodiment 1, and corresponding to line VIII-VIII of FIG. 6.
[FIG. 10] FIG. 10 is a flowchart illustrating a process of wrapping to a ring part of the surface material in Embodiment 1.
[FIG. 11] FIG. 11 is a cross-sectional view illustrating a state in which a positioning protrusion part of the surface material and a positioning hole of the ring part are disposed to face each other in Embodiment 1.
[FIG. 12] FIG. 12 is a cross-sectional view illustrating a state in which the positioning protrusion part of the surface material is fit into the positioning hole of the ring part in Embodiment 1.
[FIG. 13] FIG. 13 is a cross-sectional view illustrating a state in which a conductive member is installed in a mold for molding a surface material of Embodiment 2.
[FIG. 14] FIG. 14 is a cross-sectional view illustrating the surface material of Embodiment 2 and corresponding to line VIII-VIII of FIG. 6.
[FIG. 15] FIG. 15 is a cross-sectional view illustrating a surface material of Embodiment 3 and corresponding to line VIII-VIII of FIG. 6.
[FIG. 16] FIG. 16 is a cross-sectional view illustrating a surface material of Embodiment 4 and corresponding to line VIII-VIII of FIG. 6.
[FIG. 17] FIG. 17 is a cross-sectional view illustrating a state in which the surface material of Embodiment 4 is wrapped around a ring part, and corresponding to line II-II of FIG. 1.
[FIG. 18] FIG. 18 is a cross-sectional view illustrating a surface material of Embodiment 5.

### DESCRIPTION OF THE EMBODIMENTS

### (Embodiment 1)

A surface material 30 according to Embodiment 1 is used to be wrapped around a steering wheel 10 (an example of a shaft member).

### 1. Configuration of a steering wheel 10

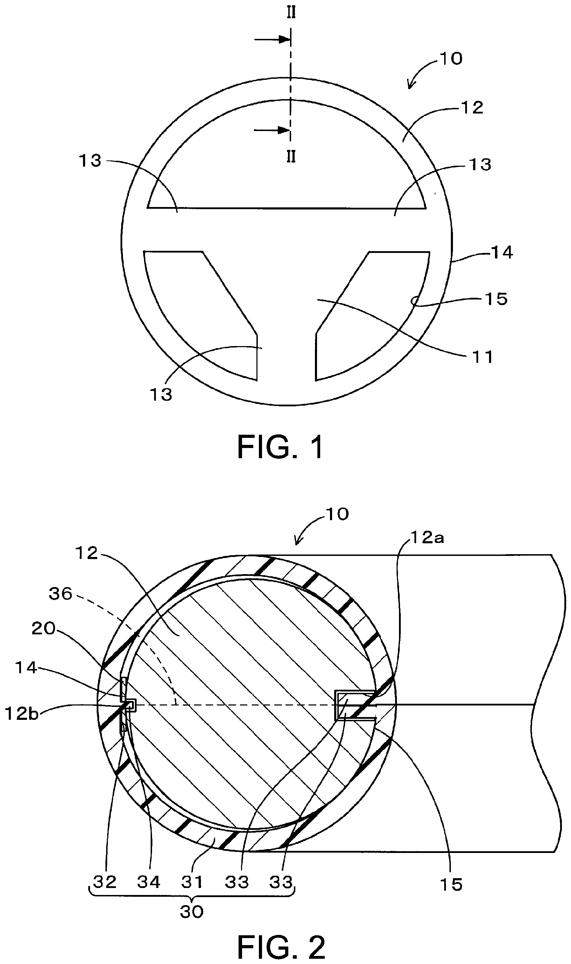

A configuration of the steering wheel 10 is described with reference to FIGs. 1 and 2. As shown in FIG. 1, the steering wheel 10 includes a core part 11, a ring part 12, and multiple linking parts 13, 13, 13 linking the core part 11 and the ring part 12. The ring part 12 has a sensor function for detecting a contact of a human hand.

As shown in FIG. 1, the ring part 12 is arranged as a shaft member in which the central axis is a convex curve. The ring part 12 of the embodiment is formed in a circular ring shape. In the embodiment, the circular ring shape is an example of the convex curve. The surface on the distant side from the curvature center of the ring part 12 is arranged as an outer circumferential surface 14 of the ring part 12, and the surface on a side close to the curvature center of the ring part 12 is arranged as an inner circumferential surface 15 of the ring part 12. However, the ring part 12 is not limited to being circular, but can be formed in any shape.

As shown in FIG. 2, a conductive member 20 and the surface material 30 are installed to the outer surface of the ring part 12. The ring part 12 is formed by covering the outer circumference of a core material not shown herein with resin. The resin forming the ring part 12 is molded by using a foamed resin or an elastomer resin, for example. The cross-section perpendicular to the axis of the ring part 12 is formed in a circular shape. Accordingly, the entire surface of the ring shape 12 is not a planar surface, but has a three-dimensional curved surface. Here, the cross-sectional shape perpendicular to the axis of the ring part is not limited to being circular, but may also have any arbitrary shape, such as an oval shape, an egg shape, a polygonal shape.

A groove part 12a is formed, throughout the entire circumference, on the inner circumferential surface 15 on the close side from the curvature center of the ring part 12. A pair of flange parts 33 are fixed into the groove part 12a in a fit state. The flange part 33 is an example of an engagement convex part.

A positioning hole 12b is formed on an outer circumferential surface 14 on a distant side from the curvature center of the ring part 12. The cross-sectional shape of the positioning hole 12b is not particularly limited. Any arbitrary shape, such as a circular shape, an oval shape, a polygonal shape, may also be adopted. In the embodiment, the cross-sectional shape of the positioning hole 12b is formed in a rectangular shape. A positioning protrusion part 34 to be described afterwards is fit into the positioning hole 12b.

The surface material 30 is wrapped around the outer surface of the ring part 12. The surface material 30 covers the entire circumference (the entire circumference of the circumferential direction of FIG. 2) of the ring part 12. The surface material 30 is molded by using a foamed resin or an elastomer resin, for example. In the state of being wrapped around the ring part 12, the outer surface of the surface material 30 forms a design surface. Details about the surface material 30 will be described in detail in the following.

In the state of being wrapped around the outer surface of the ring part 12, the conductive member 20 is fixed to the inner surface of the surface material 30. The conductive member 20 is bonded to the inner surface of the surface material 30 through a conventional process, such as adhesion, thermal fusion. The conductive member 20 is the inner surface of the surface material 30, and is installed to the entire circumference of the ring part 12 along the outer circumferential surface 14 on the distant side from the curvature center of the ring part 12. However, the conductive member 20 may also be omitted.

### 2. Overall configuration of the conductive member 20

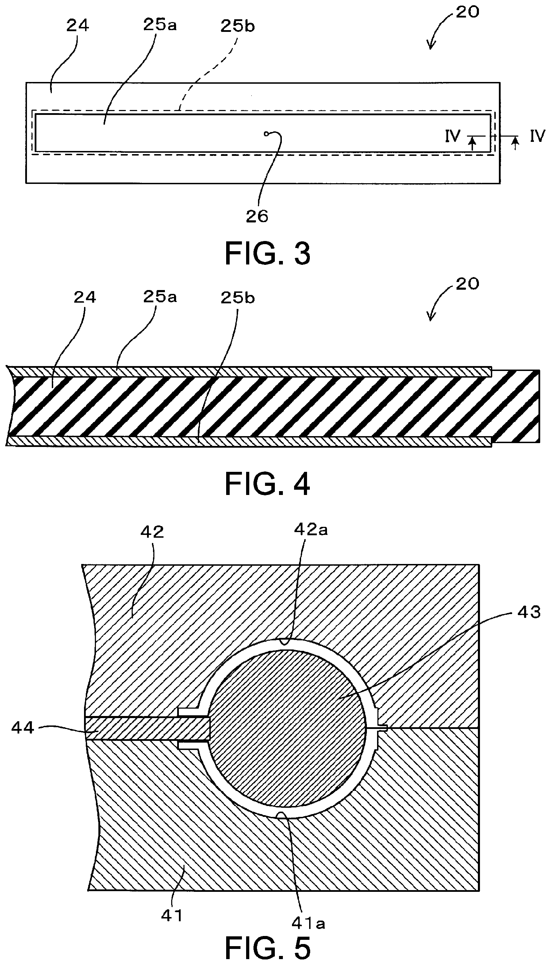

The overall configuration of the conductive member 20 according to the embodiment is described with reference to FIGs. 3 and 4. For the ease of description, the illustration of thickness is exaggerated in FIGs. 3 and 4. The conductive member 20 at least includes an elastomer layer 24, a first electrode layer 25a, and a second electrode layer 25b.

As shown in FIG. 3, the elastomer layer 24 is formed in an elongated planar shape. However, by configuring the elastomer layer 24 to be flexible and stretchable, the elastomer layer 24 can exhibit any arbitrary shape.

The first electrode layer 25a and the second electrode layer 25b are formed like a flexible sheet with a conductive property. However, it may also be that the first electrode layer 25a and the second electrode layer 25b are not sheet-like. By being integrally formed with multiple elastomer layers 24, it may also be configured that the entire conductive member 20 is formed to be sheet-like.

The elastomer layer 24 is formed by including an elastomer as a main component, for example. Accordingly, the elastomer layer 24 is soft. That is, the elastomer layer 24 is configured to be flexible and stretchable in a surface direction. The elastomer layer 24 is formed by including, as a main component, a thermoplastic material, particularly a thermoplastic elastomer, for example. The elastomer layer 24 may be formed by the thermoplastic elastomer itself, and may also be formed, as a main component, an elastomer crosslinked by heating a thermoplastic elastomer as a raw material. In addition, the elastomer layer 24 may also be formed, as a main component, a reaction setting elastomer or a thermosetting elastomer.

In addition, the elastomer layer 24 may also include a rubber, a resin, or other materials other than a thermoplastic elastomer. For example, in the case where the elastomer layer 24 includes rubber, such as ethylene-propylene rubber (EPM, EPDM), the softness of the elastomer layer 24 is facilitated. From the perspective of facilitating the softness of the elastomer layer 24, the elastomer layer 24 may also contain a softness imparting component, such as a plasticizer.

In addition, for the elastomer layer 24, a thermally conductive material may be adopted. Therefore, for the elastomer layer 24, a thermoplastic elastomer with a favorable thermal conductivity may be used, or the elastomer layer 24 may also contain a filler capable of increasing thermal conductivity.

The first electrode layer 25a is disposed on a first surface of the elastomer layer 24, that is, the front surface (upper surface of FIG. 4) of the elastomer layer 24, and the second electrode layer 25b is disposed on a second surface of the elastomer layer 24, that is, the back surface (lower surface of FIG. 4) of the elastomer layer 24. The first electrode layer 25a and the second electrode layer 25b are disposed at positions facing each other via the elastomer layer 24 (see FIG. 3). The first electrode layer 25a and the second electrode layer 25b are formed in a substantially identical shape. "Substantially identical" includes the case of being identical as well as the case of being asserted as identical even if not identical.

The first electrode layer 25a and the second electrode layer 25b form electrodes for detection. The first electrode layer 25a and the second electrode layer 25b are conductive. In addition, the first electrode layer 25a and the second electrode layer 25b are soft. That is, the first electrode layer 25a and the second electrode layer 25b are configured to be flexible and stretchable in the surface direction. The first electrode layer 25a and the second electrode layer 25b are formed by, for example, conductive cloths, conductive elastomers, metal foils, etc.

FIG. 4 illustrates the case where the first electrode layer 25a and the second electrode layer 25b are conductive clothes. The case where the first electrode layer 25a and the second electrode layer 25b are conductive clothes is described in detail. The conductive cloth is a woven or non-woven fabric made of conductive fibers. Here, conductive fibers are formed by covering the surfaces of soft fibers by using a conductive material. The conductive fibers, for example, are formed by plating the surfaces of resin fibers, such as polyethylene, with copper, nickel, etc.

In such case, the first electrode layer 25a and the second electrode layer 25b are bonded to the elastomer layer 24 through fusion (thermal fusion) of the elastomer layer 24 itself. In addition, since the first electrode layer 25a and the second electrode layer 25b are clothes, the first electrode layer 25a and the second electrode layer 25b have multiple through holes. Thus, a portion of the elastomer layer 24 enters the through holes of the first electrode layer 25a and the second electrode layer 25b. That is, the elastomer layer 24 is embedded in at least a portion of the first electrode layer 25a and the second electrode layer 25b.

The case where the first electrode layer 25a and the second electrode layer 25b are formed by conductive elastomers is described in detail. In such case, the first electrode layer 25a and the second electrode layer 25b are formed by using an elastomer as a base material and providing a conductive filler. The elastomer as the base material of the first electrode layer 25a and the second electrode layer 25b may have a main component of the same type as the elastomer layer 24. In particular, the first electrode layer 25a and the second electrode layer 25b may also be formed by thermoplastic elastomers.

However, the first electrode layer 25a and the second electrode layer 25b may also be formed by a material having a softening point higher than the softening point of the elastomer layer 24. This is to allow the elastomer layer 24 to be softened prior to the first electrode layer 25a and the second electrode layer 25b at the time of bonding the first electrode layer 25a and the second electrode layer 25b to the elastomer layer 24 through fusion (thermal fusion) of the elastomer layer 24 itself. As a result, the thickness of the elastomer layer 24 can be set to a desired thickness.

Here, the first electrode layer 25a and the second electrode layer 25b are bonded to the elastomer layer 24 through fusion (thermal fusion) of the elastomer layer 24 itself. In addition, in the case where the first electrode layer 25a and the second electrode layer 25b are formed so that the elastomer is formed at the surface layer, through the fusion (thermal fusion) of the first electrode layer 25a and the second electrode layer 25b itself, the first electrode layer 25a as well as the second electrode layer 25b and the elastomer layer 24b are bonded. That is, the first electrode layer 25a as well as the second electrode layer 25b and the elastomer layer 24 are bonded through fusion with each other. The first electrode layer 25a as well as the second electrode layer 25b and the elastomer layer 24 may also be bonded through fusion of only either one of the first electrode layer 25a as well as the second electrode layer 25b and the elastomer layer 24.

The case where the first electrode layer 25a and the second electrode layer 25b are formed by metal foils is described in detail. The metal foil may have multiple through holes like the conductive cloth. Accordingly, the first electrode layer 25a and the second electrode layer 25b are flexible and are stretchable in the surface direction together with the deformation of through holes. The metal foil may be a conductive metal material. For example, a copper foil, an aluminum foil, etc., can be used. In addition, the first electrode layer 25a and the second electrode layer 25b are bonded through fusion (thermal fusion) of the elastomer layer 24 itself, like the case of conductive clothes.

However, the first electrode layer 25a and the second electrode layer 25b may also be disposed in parallel along the surface direction on the first surface of the elastomer layer 24.

The conductive member 20 may also have a configuration in which a heater wire or a shield wire is disposed on the second surface of the elastomer layer 24. In addition, the conductive member 20 may also have a configuration in which a heater-and-shield wire serving as a heater wire and a shield wire is disposed on the second surface of the elastomer layer 24. In addition, it may also be configured that a shield wire or a heater-and-shield wire is disposed on the first surface or the second surface of the elastomer layer 24.

As shown in FIG. 3, in the conductive member 20, a through hole 26 where the positioning protrusion part 34 of the surface material 30 (to be described afterwards) penetrates through is formed by penetrating through the elastomer layer 24, the first electrode layer 25a, and the second electrode layer 25b.

### 3. Surface material 30

In the following, the surface material 30 is described with reference to FIGs. 5 to 9. As shown in FIG. 5, the surface material 30 is formed by cooling and curing the resin after molten resin is injected into molds 41, 42, 43, and 44.

The molds 41, 42, 43, and 44 are as follows: the first mold 41 is located on the lower side of FIG. 5 and provided with a first concave part 41a recessed downward; the second mold 42 is located on the upper side of FIG. 5 and provided with a second concave part 42a recessed upward; the shaft mold 43 is located in a space between the first concave part 41a of the first mold 41 and the second concave part 42a of the second mold 42; and the slide mold 44 located on a lateral side of the shaft mold 43 and slidable in the left-right direction in FIG. 5. However, the relative positions between the first mold 41 and the second mold 42 are not particularly limited. The first mold 41 and the second mold 42 may also be arranged in the left-right direction.

The cross-section of the first concave part 41a of the first mold 41 is semi-circular, and the cross-section of the second concave part 42a of the second mold 42 is semi-circular. In addition, the cross-section perpendicular to the axis of the shaft mold 43 is circular. A gap is formed among the outer surface of the shaft mold 43 and the inner surfaces of the first concave part 41a of the first mold and the second concave part 42a of the second mold 42.

As shown in FIG. 5, during injection molding, the right end of the slide mold 44 contacts the left side surface of the shaft mold 43. In a portion near the right end of the slide mold 44, a gap is formed between the first mold 41 and the second mold 42.

Molten resin is injected into the gap formed among the first mold 41, the second mold 42, the shaft mold 43, and the slide mold 44. Then, through cooling and curing, the surface material 30 is formed.

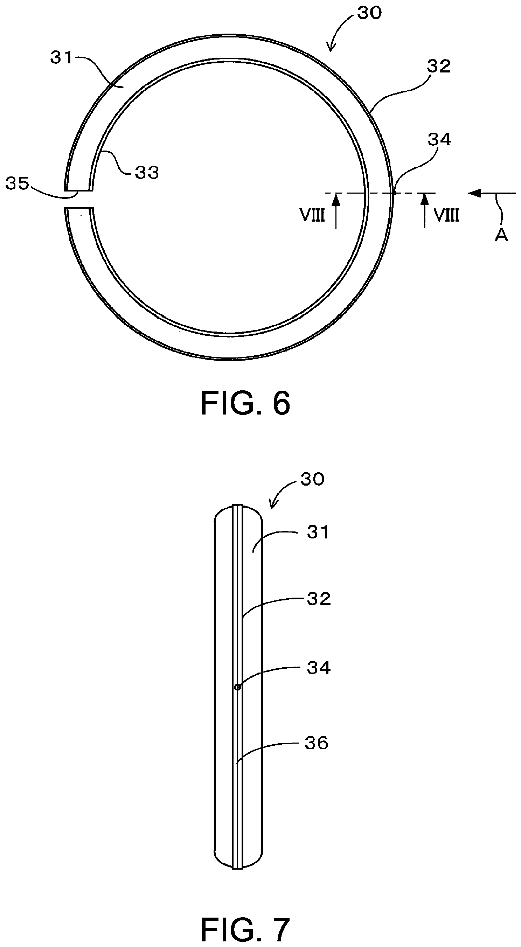

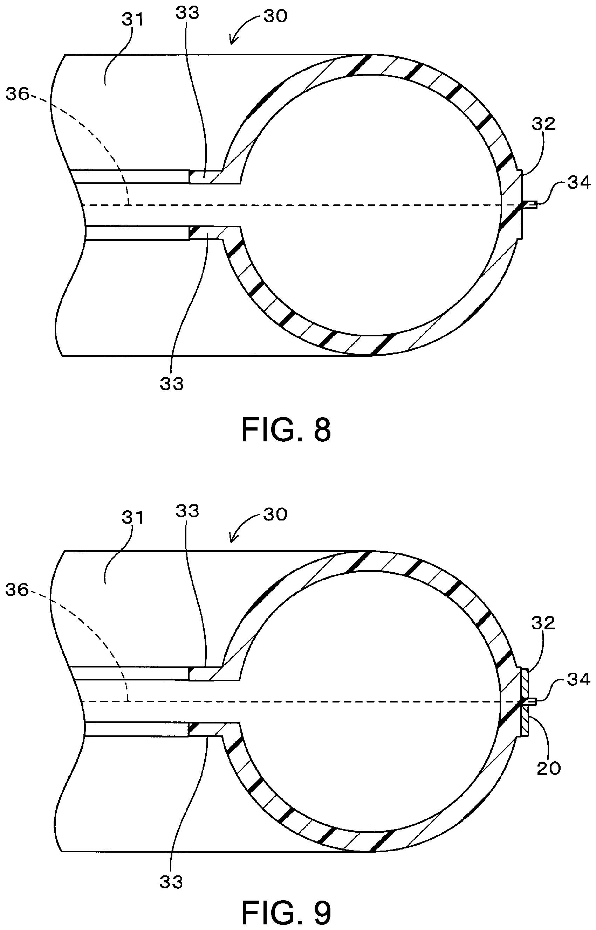

As shown in FIGs. 6 and 7, the surface material 30 includes a body part 31, a seat surface 32, the pair of flange parts 33, and the positioning protrusion part 34. When viewed in a direction perpendicular to the paper surface of FIG. 6, the body part 31 is formed in a substantially C shape. An opening portion in the substantially C shape is defined as a notch part 35. On the outer surface of the body part 31, the seat surface 32, which is planar, is formed throughout the entire circumference. The conductive member 20 is fixed to the seat surface 32 (see FIG. 9).

As shown in FIG. 7, a parting line 36 is formed on the outer surface of the seat surface 32. Among the surface material 30, the parting line 36 is formed at a position corresponding to the mating surface between the first mold 41 and the second mold 42 in FIG. 5. The parting line 36 is formed throughout the entire circumference of the outer surface of the seat surface 32. However, the seat surface 32 may be omitted. In such case, the parting line 36 may also be formed on the outer surface of the body part 31.

As shown in FIG. 8, the cross-sectional shape of the body part 31 orthogonal to the axial direction of the ring part 12 is formed as a C shape. "C shape" includes the case of being a C shape as well as the case of being asserted as a substantially C shape even if the shape is not a C shape. In the body part 31, the pair of flange parts 33 (an example of the engagement convex part) are formed at a pair of ends serving as the opening ends of the C shape. The pair of flange parts 33 extend along the axial direction of the ring part 12 and protrude outward from the pair of end parts. The protrusion dimension of the flange part 33 from the body part 31 is formed to be constant throughout the entire circumference. However, the protrusion dimension of the flange part 33 from the body part 31 may also be formed to differ according to the positions.

When wrapped around the ring part 12, the flange part 33 is fit into the groove part 12a formed in the ring part 12. The depth dimension of the groove part 12a of the ring part 12 is formed to be the same as or slightly greater than the protrusion height dimension of the flange part 33 from the body part 31. The flange part 33 is fixed by an adhesive injected into the groove part 12a. Accordingly, the surface material 30 is suppressed from being deformed in the opening direction.

Among the surface material 30, the positioning protrusion part 34 protruding outward is formed on the outer surface located on a side opposite to the notch part 35. The cross-sectional shape of the positioning protrusion part 34 is not particularly limited. Any arbitrary shape, such as a circular shape, an oval shape, a polygonal shape, may also be adopted. In the embodiment, the cross-sectional shape of the positioning protrusion part 34 is formed in a rectangular shape. The positioning protrusion part 34 is formed immediately above the parting line 36, and the parting line 36 is also formed at the positioning protrusion part 34. However, the positioning protrusion part 34 may also be formed at a portion where the parting line 36 is not formed in the body part 31.

The positioning protrusion part 34 is configured to be fit into the positioning hole 12b formed in the ring part 12 in a contact process to be described afterwards. The depth dimension of the positioning hole 12b of the ring part 12 is formed to be the same as or slightly greater than the protrusion height dimension from the seat surface 32.

The inner surface of the body part 31 may also be a smooth curved surface, and may also be formed with various patterns, such as grains, dimples. According to the embodiment, since various patterns can be formed on the inner surface of the body part 31, various patterns can be combined. For example, it is possible to form multiple grain patterns on the inner surface of one body part 31.

### 4. Method for wrapping the surface material 30

In the following, an example of the method for wrapping the surface material 30 where the conductive member 20 is fixed to the ring part 12 of the steering wheel 10 is described with reference to FIGs. 2, 5 and 8 to 12. Nevertheless, the method for wrapping the surface material 30 is not limited to the description below.

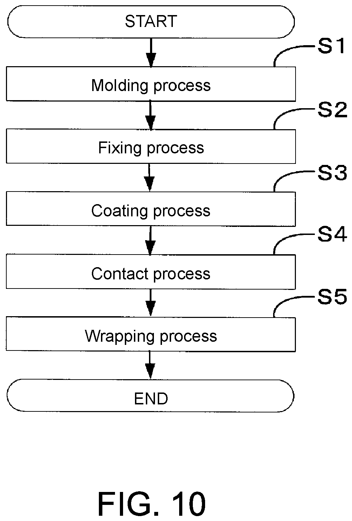

Firstly, as shown in FIG. 5, the surface material 30 is formed in a predetermined shape through injection molding (FIG. 10, molding process S 1). After the resin injected into the molds 41, 42, 43, and 44 is cured, the surface material 30 is removed from the molds (see FIG. 8).

Then, as shown in FIG. 9, the sheet-like conductive member 20 is bonded and fixed to the seat surface 32 formed to be planar on the outer surface of the surface material 30 (FIG. 10, fixing process S2). At this time, the positioning protrusion part 34 of the surface material 30 penetrates through the through hole 26 of the conductive member 20. The seat surface 32 and the conductive member 20 may be adhered by an adhesive. Alternatively, one or both of the seat surface 32 and the conductive member 20 may be thermally fused.

The adhesive is coated on the outer surface of the surface material 30 where the conductive member 20 is fixed. In addition, an adhesive is coated on the outer surface of the ring part 12 (FIG. 10, coating process S3). The adhesive is also injected into the positioning hole 12b and the groove part 12a of the ring part 12.

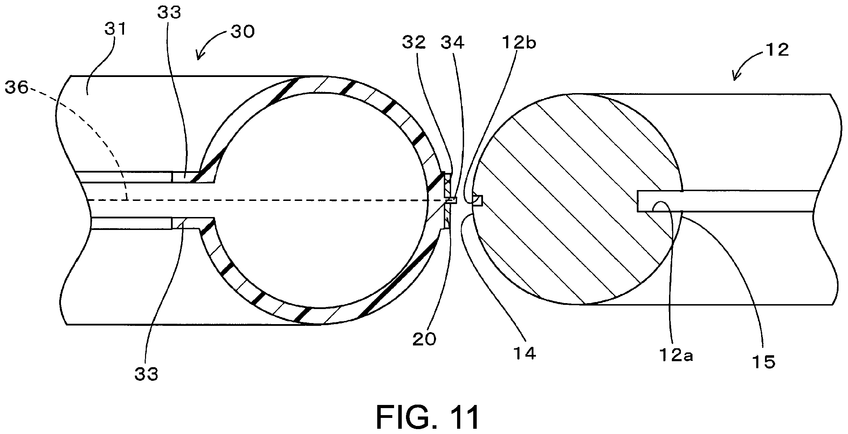

As shown in FIG. 11, the surface material 30 and the ring part 12 are disposed at positions where the positioning protrusion part 34 of the surface material 30 and the positioning hole 12b of the ring part 12 are opposite to each other.

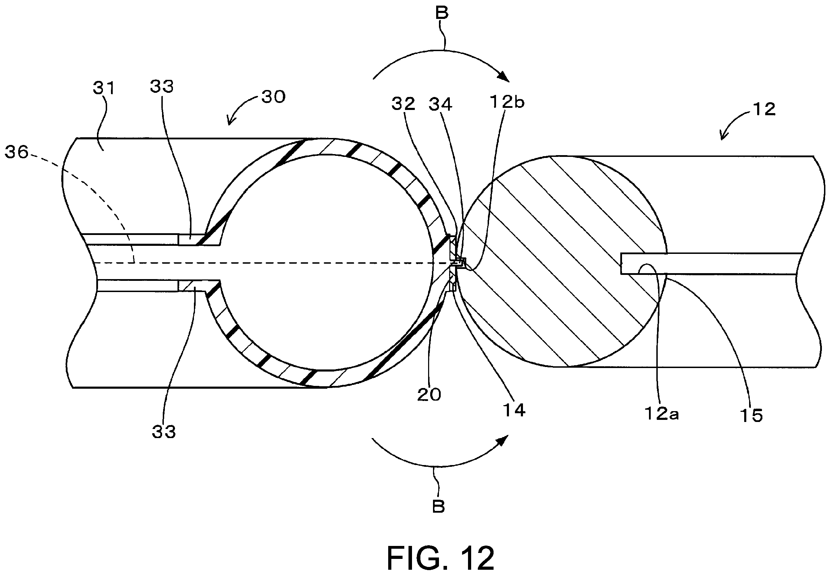

As shown in FIG. 12, the positioning protrusion part 34 of the surface material 30 is inserted into the positioning hole 12b of the ring part 12, and the outer surface of the positioning protrusion part 34 and the inner surface of the positioning hole 12b are brought into contact (FIG. 10, contact process S4). Accordingly, the surface material 30 and the ring part 12 relatively positioned.

Then, as indicated by an arrow B of FIG. 12, the surface material 30 is turned over. Accordingly, the surface material 30 where the conductive member 20 is wrapped around the outer surface of the ring part 12 (FIG. 10, wrapping process S5). That is, the surface material 30 is wrapped around the outer surface of the ring part 12 along the circumferential direction perpendicular to the axis of the ring part 12. The pair of flange parts 33 of the surface material 30 are fit into the groove part 12a of the ring part 12. Then, as shown in FIG. 2, by using the adhesive injected into the groove part 12a and the adhesive coated on the pair of flange parts 33, the pair of flange parts 33 are fixed into the groove part 12a. Accordingly, the surface material 30 is prevented from returning from deformation and opening in a direction opposite to the arrow sign of FIG. 12.

The surface material 30 extends in the circumferential direction about the curvature center of the ring part 12. Accordingly, the ends of the surface material 30 forming the notch part 35 of the surface material 30 abut against each other. Accordingly, the ring part 12 is covered by the surface material 30 over the entire circumference. As a result, since the ring part 12 is protected by the surface material 30, the ring part 12 is prevented from coming into contact with chemicals such as disinfectant, oil, etc. As a result, the required value of the chemical resistance performance with respect to the conductive member 20 can be lowered, so the manufacturing cost of the surface material 30 can be reduced.

When the surface material 30 is wrapped around the ring part 12, a region that is the outer surface of the surface material 30 at the time when molding ends is located on the inner side of the surface material 30 and is disposed to face the outer surface of the ring part 12. Likewise, the region that is the inner surface of the surface material 30 at the time of molding is located on the outer side of the surface material 30.

In the state of being wrapped around the ring part 12, the parting line 36 formed on the surface material 30 is located on the inner side of the surface material 30. That is, the parting line 36 is not exposed on the outer surface of the surface material 30.

Then, by curing the adhesive, the surface material 30 and the ring part 12 are fixed. Accordingly, the wrapping process of the surface material 30 to the ring part 12 ends. Then, by installing the linking parts 13 and the core part 11 to the ring part, the steering wheel 10 is completed.

### 5. Effects

In the following, the effects of the embodiment are described. The surface material 30 according to the embodiment is wrapped along the circumferential direction of the ring part 12 on the ring part 12 of the steering wheel 10. In the surface material 30, in the state where the foamed resin or elastomer is die-molded, the cross-sectional shape of the planar surface orthogonal to the axial direction of the ring part 12 is formed in a C shape, and the parting line 36 of the surface material 30 is formed on the outer surface. The parting line 36 is disposed on a surface facing the outer surface of the ring part 12 in the state in which the surface material 30 is wrapped around the ring part 12.

Accordingly, in the state in which the surface material 30 is wrapped around the ring part 12, the parting line 36 is not exposed on the outer surface. Therefore, the appearance of the surface material 30 is favorable. In addition, since any shape can be formed on the inner surface in the die-molded state, the degree of freedom for molding the surface material 30 is facilitated. Moreover, since any pattern can be formed on the inner surface in the die-molded state, the manufacturing cost of the surface material 30 can be reduced.

In the embodiment, the conductive member 20 is fixed to the outer surface of at least a portion in the surface material 30 in the die-molded state. Accordingly, the conductive member 20 fixed to the surface material 30 can be used as a electrostatic transducer or a heater.

In the surface material 30 according to the embodiment in the die-molded state, at least a portion of the outer surface is formed to be planar, and the seat surface 32 where the conductive member 20 is installed is formed. By forming the seat surface 32 to be planar, the conductive member 20 can be installed easily. This is particularly effective in the case where the conductive member 20 is formed to be sheet-like.

The surface material 30 according to the embodiment is provided with the flange parts 33 on the outer surface in the die-molded state. In the state in which the surface material 30 is wrapped around the ring part 12, the flange parts 30 are engaged with the groove part 12a formed on the ring part 12. In the state of being wrapped on the ring part 12, by engaging the flange parts 33 with the groove part 12a of the ring part 12, the ring part 12 and the surface material 30 can be positioned.

In the embodiment, the flange parts 33 are formed at both of the ends as the opening ends of the C shape.

In the embodiment, in the die-molded state, at the pair of ends of the C shape, the flange parts 33 are configured to at least extend along the axial direction and serve as the pair of flange parts 33 protruding outward. In the state of being wrapped around the ring part 12, the pair of flange parts 33 are arranged in a shape of protruding toward the ring part 12. In the state in which the surface material 30 is wrapped around the ring part 12, the pair of flange parts 33 are engaged with the groove part 12a of the ring part 12. Accordingly, since the opening ends forming the C shape can be engaged with the ring part 12 via the flange parts 33, the pair of ends of the surface material 30 can be suppressed from opening and deforming in a direction away from the ring part 12.

The surface material 30 according to the embodiment includes the positioning protrusion part 34 protruding outward from the outer surface at a position different from the opening ends of the C shape in the die-molded state. In the state before being wrapped around the ring part 12, the surface material 30 is positioned with respect to the ring part 12 by engaging the positioning protrusion part 34 with the positioning hole 12b formed at the ring part 12. In the state before being wrapped around the ring part 12, the surface material 30 can be positioned at the ring part 12 by engaging the positioning protrusion part 34 with the positioning hole 12b of the ring part 12. Accordingly, the efficiency of the operation for wrapping the surface material 30 around the ring part 30 can be facilitated.

The ring part 12 of the embodiment has a three-dimensional curved surface. The three-dimensional curved surface cannot be formed by simply curving a planar surface. It is effective to apply the surface material 30 of the embodiment to the ring part 12 having such three-dimensional curved surface.

The ring part 12 of the embodiment is an annular member. The surface of the annular member is arranged as the three-dimensional curved surface. Thus, according to the embodiment, the surface material 30 can be applied to the annular member, such as the steering wheel 10.

The embodiment is related to the steering wheel 10 including the surface material 30 and the ring part 12 in which the surface material 30 is wrapped around the outer surface. According to the embodiment, the appearance of the steering wheel 10 where the surface material 30 is applied to the ring part 12 can be improved.

The method for wrapping the surface material 30 according to the embodiment includes: the molding process of forming the surface material 30 in which the cross-sectional shape is configured as a C shape and which has the parting line 36 on the outer surface through die-molding of foamed resin or elastomer; and the wrapping process of turning over the inner surface and the outer surface of the surface material 30 to wrap on the outer surface of the ring part 12. In the state in which the surface material 30 is wrapped around the ring part 12, the parting line 36 is located on the inner side, so the appearance of the surface material 30 is improved.

The method for wrapping the surface material 30 according to the embodiment includes the coating process of coating an adhesive to the outer surface of the surface material 30 in the die-molded state or the outer surface of the ring part 12. The wrapping process is executed after the coating process. According to the embodiment, compared with the case of sewing the surface material 30 after the surface material 30 is wrapped around the ring part 12, the manufacturing process can be simplified. In addition, since the adhesive is coated on the outer surface of the surface material 30 or the outer surface of the ring part 12, the operational efficiency can be facilitated.

In the wrapping process of the method for wrapping the surface material 30 according to the embodiment, a portion of the outer surface of the surface material 30 in the die-molded state is brought into contact with the outer surface of the ring part 12, and then the inner surface and the outer surface of the surface material 30 are turned over to be wrapped on the outer surface of the ring part 12. By bringing a portion of the outer surface of the surface material 30 into contact with the outer surface of the ring part 12, the surface material 30 can be positioned with respect to the ring part 12. In this way, after the surface material 30 and the ring part 12 are positioned, the surface material 30 can be wrapped around the ring part 12. Therefore, the efficiency of the operation for wrapping the surface material 30 can be facilitated.

The process of wrapping the surface material 30 according to the embodiment includes the fixing process of fixing the conductive member 20 to the outer surface of the surface material 30 in the die-molded state. The wrapping process is executed after the fixing process. Accordingly, compared with the case where the conductive member 20 is fixed to the inner surface of the C-shaped surface material 30, the process of fixing the surface material 30 and the conductive material 20 can be facilitated.

### (Embodiment 2)

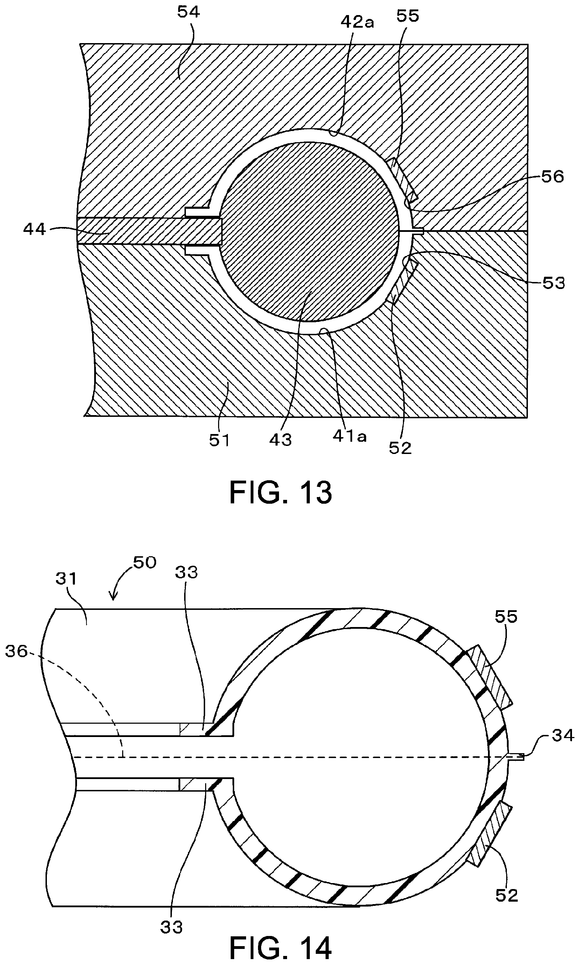

In the following, a surface material 50 according to Embodiment 2 is described with reference to FIGs. 13 and 14. As shown in FIG. 13, a first installation concave part 53 to which a first conductive member 52 is installed is formed on the inner surface of a first mold 51. In addition, a second installation concave part 56 to which a second conductive member 55 is installed is formed on the inner surface of a second mold 54. The first conductive member 52 and the second conductive member 55 serve as an example of the conductive member.

As shown in FIG. 13, the first conductive member 52 is held in a state of being positioned with respect to the first mold 51 by using a conventional means in the first installation concave part 53. Likewise, the second conductive member 55 is held in a state of being positioned with respect to the second mold 54 by using a conventional means in the second installation concave part 56. The first conductive member 52 and the second conductive member 55 are configured to be removed easily from the first mold 51 and the second mold 54, respectively, when the first mold 51 and the second mold 54 are opened.

Resin is injected into the gap among the first mold 51, the second mold 54, the shaft mold 43, and the slide mold 44 and then cured. Then, the first conductive member 52 and the second conductive member 55 are integrated with the cured resin. Accordingly, the surface material 50, the first conductive member 52, and the second conductive member 55 can be integrated in a die-molding process. Nevertheless, the number of the conductive member installed to the first mold 51 and the second mold 54 may be one or three or more. Then, the first mold 51 and the second mold 54 are opened, and the surface material 50 is taken out.

As shown in FIG. 14, the first conductive member 52 and the second conductive member 55 are fixed to the outer surface of the die-molded surface material 50. A portion the first conductive member 52 and the second conductive member 55 is embedded inside the surface material 50. A portion of the first conductive member 52 and the second conductive member 55 may also be integrated with a portion of the surface material 50.

The configuration other than the above is substantially the same as the configuration of Embodiment 1. Therefore, the same component is labeled with the same reference symbol, and repeated description is omitted.

In the embodiment, a portion of the first conductive member 52 and the second conductive member 55 is an insert member in die-molding. Also, for the process of wrapping the surface material 50 according to the embodiment, the surface material 50 is molded in a state in which a portion of the first conductive member 52 and the second conductive member 55 is positioned as the insert member in die-molding in the die-molding process. Accordingly, at the time of die-molding the surface material 50, the conductive member 20 can be integrated, so the manufacturing process can be carried out efficiently.

### (Embodiment 3)

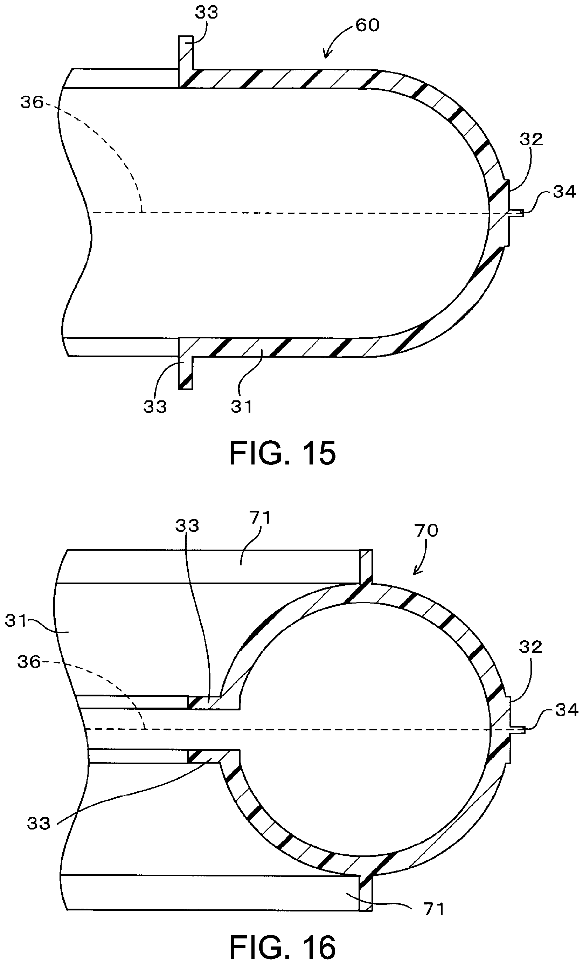

In the following, Embodiment 3 is described with reference to FIG. 15. The cross-section perpendicular to the axis of a surface material 60 of the embodiment is in a U shape. The flange parts 33 protruding outward are formed at a pair of ends of the U-shaped opening.

The configuration other than the above is substantially the same as the configuration of Embodiment 1. Therefore, the same component is labeled with the same reference symbol, and repeated description is omitted.

### (Embodiment 4)

In the following, Embodiment 4 is described with reference to FIGs. 16 to 17. As shown in FIG. 16, a surface material 70 of the embodiment has a reinforcement rib 71 protruding outward from the outer surface at a position different from the opening ends of the C shape. The surface material 70 of the embodiment has two reinforcement ribs 71. The reinforcement rib 71 is each formed in a region between the opening end of the C shape and the positioning protrusion part 34 in the surface material 70. The reinforcement rib 71 is formed along the axial direction. The protrusion dimension of the reinforcement rib 71 from the outer surface of the surface material 70 is formed to be constant along the axial direction. With the reinforcement rib 71, the strength of the surface material 70 can be facilitated. However, the number of the reinforcement rib 71 may be one or three or more. In addition, the reinforcement rib 71 may also be formed along a direction intersecting with the axial direction. In addition, the protrusion dimension of the reinforcement rib 71 from the outer surface of the surface material 70 is not particularly limited, and may also be configured to vary along the axial direction.

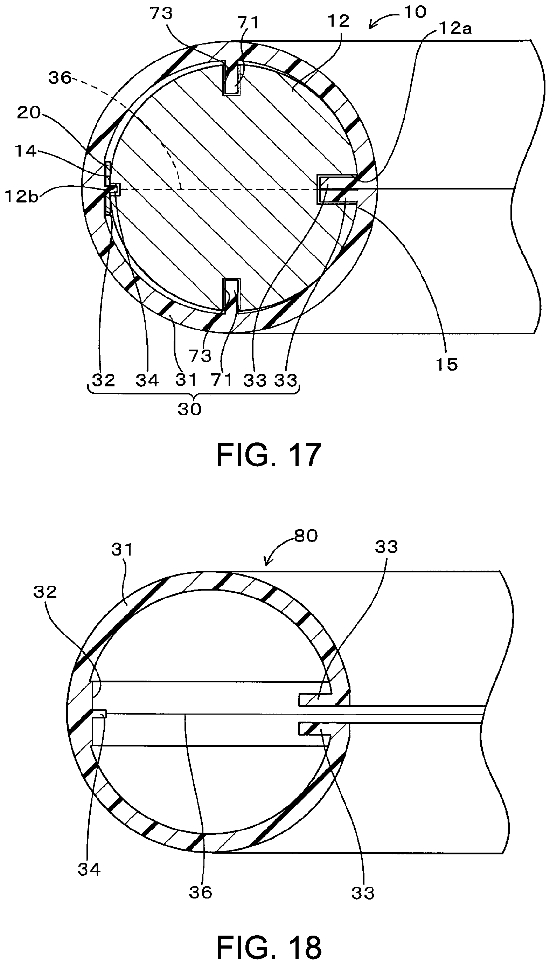

As shown in FIG. 17, in the state of being wrapped around a ring part 72, the reinforcement rib 71 of the surface material 70 is fit into a clearance groove 73 formed on the outer surface of the ring part 72. The depth dimension of the clearance groove 73 is formed to be equal to or greater than the protrusion dimension of the reinforcement rib 71 from the outer surface of the surface material 70. By fitting the reinforcement rib 71 into the clearance groove 73, the surface material 70 is prevented from moving along the circumferential direction of the ring part 72.

The configuration other than the above is substantially the same as the configuration of Embodiment 1. Therefore, the same component is labeled with the same reference symbol, and repeated description is omitted.

### (Embodiment 5)

In the following, Embodiment 5 is described with reference to FIG. 17. In a surface material 80 according to the embodiment, the surface material 80 in the molded state is turned over. That is, the surface material 80 is formed in a C shape, and the parting line 36 is formed on the inner surface of the C shape. On the inner surface of the surface material 80, at positions on a side opposite to the opening ends of the C shape, the seat surface 32 forming a planar shape is formed. In addition, the pair of flange parts 33 protruding inwardly are formed at the pair of opening ends of the C shape.

The configuration other than the above is substantially the same as the configuration of Embodiment 1. Therefore, the same component is labeled with the same reference symbol, and repeated description is omitted.

In the surface material 80 of the embodiment, the cross-sectional shape of the planar surface orthogonal to the axial direction is formed in a C shape, and the parting line 36 is formed on the inner surface. The cross-sectional shape of the surface material 80 is also in a U shape.

By arranging the outer surface of the ring part 12 and the inner surface of the surface material 80 to face each other to install the surface material 80 to the ring part 12, the parting line 36 is not exposed on the outer surface. Thus, the appearance of the surface material 80 can be improved.

The technology disclosed in the specification is not limited to the embodiments described above and illustrated in the drawings, but also includes various aspects such as the following.

The shape of the ring part of the steering wheel 10 is not limited to an annular shape. For example, the ring part of the steering wheel 10 may be formed in a substantially D shape, may also be formed in a rectangular shape, and can be formed in an arbitrary shape.

## Claims

1. A surface material (30, 50, 60, 80), wrapped along a circumferential direction of a shaft member (12, 72) in a region of at least a portion of the shaft member,
wherein, in a state in which a foamed resin or an elastomer is die-molded, a cross-sectional shape of a planar surface orthogonal to an axial direction of the shaft member is formed to be a C shape or a U shape, and a parting line (36) is formed on an outer surface, and
in a state of being wrapped around the shaft member, the parting line is disposed on a surface facing the shaft member.

2. The surface material as claimed in claim 1, wherein a conductive member (20, 52, 55) is fixed to an outer surface of at least a portion in a die-molded state.

3. The surface material as claimed in claim 2, wherein, in the die-molded state, at least a portion of the outer surface is formed in a planar shape, and a seat surface (32) to which the conductive member is installed is formed.

4. The surface material as claimed in claim 2, wherein the conductive member is an insert member for die-molding.

5. The surface material as claimed in any one of claims 1 to 4, comprising an engagement convex part (33) protruding on the outer surface in a die-molded state, wherein the engagement convex part is engaged with the shaft member in a state of being wrapped around the shaft member.

6. The surface material as claimed in claim 5, wherein the engagement convex part is formed in at least one of a pair of ends serving as opening ends of the C shape or the U shape.

7. The surface material as claimed in claim 6, wherein the engagement convex part, in the die-molded state, at least extends along the axial direction at the pair of ends and is configured as a pair of flange parts (33) protruding outward, and
in the state of being wrapped around the shaft member, the pair of flange parts are shaped to protrude toward the shaft member.

8. The surface material as claimed in any one of claims 1 to 7, comprising a reinforcement rib (71) protruding from the outer surface at a position different from opening ends of the C shape or the U shape in a die-molded state.

9. The surface material as claimed in any one of claims 1 to 8, comprising a positioning protrusion part (34) protruding outward from the outer surface at a position different from opening ends of the C shape or the U shape in a die-molded state,
wherein in a state prior to being wrapped around the shaft member, the positioning protrusion part is positioned with respect to the shaft member by being engaged with the shaft member.

10. The surface material as claimed in any one of claims 1 to 9, wherein the shaft member has a three-dimensional curved surface.

11. The surface material as claimed in any one of claims 1 to 10, wherein the shaft member is an annular member.

12. A surface material, wrapped along a circumferential direction of a shaft member in a region of at least a portion of the shaft member,
wherein a cross-sectional shape of a planar surface orthogonal to an axial direction of the shaft member is formed in a C shape or a U shape, and
a parting line is formed on an inner surface.

13. A shaft member unit, comprising:
the surface material as claimed in any one of claims 1 to 12; and
the shaft member, in which the surface material is wrapped around an outer surface.

14. A method for wrapping a surface material, comprising:
a molding process (S1) of forming a surface material in which a cross-sectional shape is formed in a C shape or a U shape through die-molding of a foamed resin or an elastomer and which has a parting line on an outer surface; and
a wrapping process (S5) of turning over an inner surface and an outer surface of the surface material to be wrapped around an outer surface of a shaft member.

15. The method for wrapping the surface material as claimed in claim 14, comprising a coating process (S3) of coating an adhesive on the outer surface of the surface material in a die-molded state or the outer surface of the shaft member,
wherein the wrapping process is executed after the coating process.

16. The method for wrapping the surface material as claimed in claim 14 or 15, wherein, in the wrapping process, a portion of the outer surface of the surface material in a die-molded state is brought into contact with the outer surface of the shaft member (S4), and then the inner surface and the outer surface of the surface material are turned over to be wrapped around the outer surface of the shaft member.

17. The method for wrapping the surface material as claimed in any one of claims 14 to 16, wherein in the molding process, the surface material is molded in a state in which a conductive member is positioned as an insert member for die-molding.

18. The method for wrapping the surface material as claimed in any one of claims 14 to 16, comprising a fixing process (S2) of fixing a conductive member to the outer surface of the surface material in a die-molded state,
wherein the wrapping process is executed after the fixing process.
